# EUROPEAN PATENT APPLICATION

(11) **EP 4 124 671 A1**
(43) Date of publication of application: **01.02.2023**
(21) Application number: 21188527.2
(22) Date of filing: 29.07.2021
(51) Int. Cl.: C23C 4/02, C23C 4/06, C23C 4/08, C23C 4/18, B05B 7/00, B05B 7/20, B05B 7/22, F03D 13/00

(54) **MONOPILE COATING PROCESS, MONOPILE AND MONOPILE COATING SYSTEM**

(71) Applicant: Sif Holding N.V., 6041 TA Roermond (NL)
(72) Inventor: Stowers, David, 6041 TA Roermond (NL); Mazzoleni, Marzio, 6041 TA Roermond (NL); van de Logt, Job, 6041 TA Roermond (NL)
(74) Representative: Nederlandsch Octrooibureau

(57) **Abstract**

A monopile coating process, comprising: placing a monopile on roller supports, wherein the roller supports are provided with rotating means for rotating the monopile when the monopile is placed on the roller supports, and wherein the rollers are supporting the monopile and are located at one or more positions along the axis of the monopile when the monopile is placed on the roller supports, applying a thermally sprayed metallic coating, such as an aluminium or zinc-aluminium coating , to parts of the circumferential external surface of the monopile corresponding to the one or more positions, and, compressing at least part of the thermally sprayed metallic coating by rotating the monopile using the roller supports is disclosed. A monopile and a monopile coating system are also disclosed.

## Description

### Technical Field

The disclosure relates to the provision of a monopile coating process, a monopile and a monopile coating system.

### Background Art

An important challenge in the 21^{st} century is how to reduce greenhouse gas emissions. In order to address climate change, it is foreseen that more and more electricity should be produced using renewable sources. For example, electricity may be produced using wind turbines, preferably off-shore wind turbines.

Off-shore wind turbines need solid and reliable foundations. Compared to other options, monopile foundations are popular due to their low manufacturing costs, low transport and installation costs, and low risk profile due to their flawless track record. More than 80% of the wind turbines currently installed in the North Sea are based on monopile foundations.

At present, a typical length of a monopile is 50 to 90 m, a typical diameter of a monopile is 8 m and a typical wall thickness of a monopile is between 60 and 120 mm. Monopiles can be formed by welding a plurality of shells together. A shell can be formed by rolling one or more steel plates in a cylindrical / conical shape and welding the connecting sides of the rolled plate(s). In recent years, there has been a development towards increasing shell diameters, decreasing thickness of the steel plates of the shell and increasing monopile lengths. This development is expected to continue into at least the near future. So, it is expected that there is a future need for monopiles that are longer than 90 m and/or have a diameter greater than 8 m and/or have a wall thickness smaller than 60 mm.

Foundations at sea are exposed to a very aggressive environment. This environment is classified according to ISO 12944-2:2017 as the CX/lm4 zone (offshore class, extreme corrosivity). This means that a number of corrosion protection measures need to be taken to achieve the minimum service life of 25 years or more.

Corrosion protection measures include coating the monopile. There is a large number of different coating systems, and every system has its advantages and disadvantages. Coating systems include thermal metal sprayed coatings (TSZA, thermally sprayed zinc aluminium, or TSA, thermally sprayed aluminium) and very strong organic two-component coatings (epoxy). Both systems act as a barrier against water and oxygen to impede rust formation and metallic systems provide additional galvanic (electrochemical) protection.

A monopile coating process may be carried out in a coating hall. In such a coating hall, the environment may be controlled to be particularly suitable for coating the monopile and the coating hall may be equipped with specialized equipment for coating the monopile.

In a monopile coating process, some parts of the coating may be applied automatically and other parts of the coating may be applied manually.

A disadvantage of applying the coating manually is that a coating hall equipped for automatically applying coating may not be suitable for manually applying coating, so that the monopile may need to be moved between coating halls. Due to the size and weight of the monopile, moving the monopile between coating halls may be expensive.

A further disadvantage of applying the coating manually is that the automatic coating and the manual coating may need to be carried out sequentially. This has the disadvantage of extending the overall coating process, and may lead to greater cost and lower productivity.

Yet a further disadvantage of applying the coating manually is that, due to the size and weight of the monopiles, there is a risk of workplace accidents during the manual application of the coating process. Although the risk of workplace accidents may be reduced through various safety measures, applying the coating automatically may be inherently safer.

The above information is presented as background information only to assist with an understanding of the disclosure. No determination has been made, and no assertion is made, as to whether any of the above might be applicable as prior art with regard to the disclosure.

### Summary of the invention

### Technical Problem

There is a long-felt need for a monopile coating process in which the need for applying the coating manually is reduced in favour of applying the coating automatically. Reducing the amount of manual coating needed in favour of automatic coating may enable lower cost and/or higher productivity and/or a safer working environment and/or other benefits.

There have been various attempts to address this problem. In an automated coating process, a monopile may be placed in a controlled environment, such as a coating hall. Before applying the coating, the surface may be prepared for coating. Then, a coating may be applied to the circumferential external surface of the monopile by using a device for automatically spraying the coating on the circumferential external surface of the monopile.

In practice, it is convenient to apply the coating to the circumferential external surface of the monopile by moving the device for automatically spraying the coating along a longitudinal direction of the monopile while spraying the coating and by rotating the monopile around its axis.

It is remarked that the monopile is typically much larger and heavier than the device for automatically spraying the coating. Therefore, it is more convenient to move the device for automatically spraying the coating along the longitudinal direction of the monopile than it is to move the monopile itself.

However, also due to the size of the monopile, it is impractical to move the device for automatically spraying the coating around the circumference of the monopile, because the diameter of the monopile can be 8 m or more. It is instead preferable to rotate the monopile in order to coat the circumferential external surface of the monopile.

Typically, monopiles are coated with an epoxy coating. This may be done automatically or manually.

In a known method of coating monopiles, the surface of the monopile is first cleaned as a preparation for the coating. Then, the monopile is moved to a coating hall equipped with a device for spraying the coating. This device is used to apply the coating. After the coating process, the monopile is moved and a further coating is applied by hand. Then, a quality control procedure is performed.

Therefore, there remains a need for a monopile coating process in which there is less manual coating in favour of automatic coating.

### Technical Solution

However, as also discussed above, in the field of monopile manufacturing, there has been a development towards increasing monopile diameters, decreasing monopile wall thickness and increasing monopile lengths. This implies that the monopiles are getting heavier and longer, but not more rigid. If monopile supports and a device for rotating the monopile are only located proximal to the ends of the monopile, the supports and device for rotating the monopile should also be adapted to support and rotate the heavier monopiles. Moreover, a long and heavy monopile may bend under its own weight. So, there is a need for a monopile coating process in which monopile supports and devices for rotating the monopile are located at multiple positions along the length of the monopile.

It is possible to support the monopile on roller supports located at least one position along the axis of the monopile. Such roller supports may be powered, for example using an electrical motor, and also serve as devices for rotating the monopile. It is possible to automatically apply a coating, such as an epoxy coating, to a monopile that is supported and rotated by roller supports located at least one position along the axis of the monopile.

However, due to the weight of the monopile, there is a large pressure at contact points between the roller supports and the monopile. In practice, the pressure at contact points between the roller supports and the monopile may be estimated to exceed 1GPa. Due to this, if a coating would be applied to parts of the circumferential external monopile surface corresponding to the at least one position along the axis of the monopile where the rollers are located, the coating is subjected to a large compressive stress and expected to be damaged. So, only the parts of the circumferential external monopile surface that are not corresponding to the at least one position along the axis of the monopile where the rollers are located can be coated automatically, while the parts of the circumferential external monopile surface corresponding to the at least one position along the axis of the monopile where the rollers are located need to be coated manually. In practice, the parts of the circumferential external monopile surface corresponding to the at least one position along the axis of the monopile where the rollers are located may comprise approximately one third of the total circumferential external monopile surface. It is further remarked that the manual coating can only take place after the monopile has been moved away from the roller supports and the monopile cannot be rotated during the manual coating, since placing the monopile on roller supports and rotating the monopile would damage the coating. Even if the monopile would be moved, such that the monopile is still supported by the roller supports, but the roller supports are located at different positions, the coating that has been automatically applied to these different positions would be damaged by the roller supports when the monopile is located. So, moving the monopile merely leads to a different part of the monopile that needs to be coated manually. This means that, to coat the parts of the circumferential external monopile surface corresponding to the at least one position along the axis of the monopile where the rollers are located, the monopile needs to be removed from the roller supports, placed on static supports, a scaffolding needs to be built around the monopile in order for the whole surface to be accessible to the person applying the coating and then the coating needs to be applied manually. So, manually applying the coating to the parts of the circumferential external monopile surface corresponding to the at least one position along the axis of the monopile where the rollers are located is both time-consuming and costly.

In a first aspect of this disclosure, a monopile coating process is provided. The monopile coating process comprises placing a monopile on roller supports, wherein the roller supports are provided with rotating means for rotating the monopile when the monopile is placed on the roller supports, and wherein the rollers are supporting the monopile and are located at one or more positions along the axis of the monopile when the monopile is placed on the roller supports, applying a thermally sprayed metallic coating, such as an aluminium or zinc-aluminium coating, to parts of the circumferential external surface of the monopile corresponding to the one or more positions, and, compressing at least part of the thermally sprayed metallic coating by rotating the monopile using the rollers.

The inventors surprisingly found that applying a thermally sprayed metallic coating, such as an aluminium or zinc aluminium coating, to parts of the circumferential external surface of the monopile corresponding to the one or more positions, and compressing the thermally sprayed metallic coating by rotating the monopile using the roller supports enables the parts of the circumferential external surface of the monopile corresponding to one or more positions to be coated even if the thermally sprayed metallic coating is subjected to the pressure exerted by the roller supports on the thermally sprayed metallic coating. Although the thermally sprayed metallic coating is subjected to a large compressive stress and even though this large compressive stress changes the structure and properties of the thermally sprayed metallic coating, the thermally sprayed metallic coating remains adhesive to the monopile and suitable for corrosion protection after the compression.

When the thermally sprayed metallic coating is applied, it has a ductile and porous structure. Compressing the thermally sprayed metallic coating reduces the porosity. Surprisingly, the adhesion properties of the thermally sprayed metallic coating remain. Due to compression of the thermally sprayed metallic coating, the thermally sprayed metallic coating becomes less permeable. A coating that is less permeable may have enhanced corrosion protection properties.

It is further noted that, when the thermally sprayed metallic coating is applied, the coating solidifies quickly. So, even though the coating should be compressed after solidifying, this does not delay the monopile coating process. Applying and compressing the thermally sprayed metallic coating may take less time than applying a more conventional coating, such as an epoxy coating. Also, because there is no need to move the monopile in between the applying and compressing at least part of the thermally sprayed metallic coating to parts of the circumferential external surface of the monopile corresponding to the one or more positions and applying a coating to the other parts of the monopile, the total time needed for coating the monopile may be reduced.

Advantageously, the compressing at least part of the thermally sprayed metallic coating comprises compressing the thermally sprayed metallic coating such that the thickness of the coating is reduced by between 15% and 80%, preferably by between 20% and 70%, more preferably by between 25% and 60%, most preferably by between 30% and 50%. In other words, after compression, the layer has a thickness that is between 20% and 85%, preferably between 30% and 80%, more preferably between 40% and 75%, most preferably between 50% and 70% of the original layer thickness. Due to the large pressure on the coating, the thickness of the coating is significantly reduced. Reducing the thickness of the coating by compressing the coating lowers the porosity of the coating, thereby reducing the permeability of the coating and improving the anti-corrosive properties of the coating.

Advantageously, the compressing at least part of the thermally sprayed metallic coating comprises rotating the monopile at least 10, preferably at least 20, more preferably at least 25, most preferably at least 30 times on average. Compressing the thermally sprayed metallic coating by rotating the monopile a large number of times may increase the amount of compression of the thermally sprayed metallic coating. In practice, the monopile may be rotated during the applying the thermally sprayed metallic coating. So, it is possible that in practice not all parts of the circumferential external surface of the monopile corresponding to the one or more positions at which the roller supports are located are compressed the same amount of times.

Advantageously, after the compressing, the sprayed metallic coating comprises a surface that has a smooth, shiny and uniform appearance free from cracks, laminations, lumps or other visible imperfections. The compressing the sprayed metallic coating reduces the porosity and evens out the surface. Because of this, the surface of the coating looks visually different after the compressing, compared to a sprayed metallic coating that is not compressed. A further advantage of a smooth surface is that it becomes harder for micro-organisms to attach to the surface. Since micro-organisms may cause corrosion, a smooth surface may contribute to corrosion protection.

Advantageously, the monopile coating process further comprises, after the applying the thermally sprayed metallic coating and before or during the compressing at least part of the thermally sprayed metallic coating, applying protective materials, such as a polymer foam or a rubber sheet, over the thermally sprayed metallic coating. Applying a protective material before or during the compression of at least part of the thermally sprayed metallic coating may help to protect the coating from some forms of mechanical damage and preserve the surface from contamination.

Advantageously, the monopile coating process further comprises applying a sealer over the thermally sprayed metallic coating after the compressing the thermally sprayed metallic coating. A sealer is a low volume solid liquid coating which penetrates and fills any surface porosity. Applying a sealer after the compressing further reduces the porosity of the coated monopile surface. A lower porosity contributes to improving the anti-corrosive properties of the coating.

Advantageously, the monopile coating process further comprises applying a further coating over the thermally sprayed metallic coating, after the compressing the thermally sprayed metallic coating. For example, there may be a requirement to apply a high-visibility coating to a part of the monopile that is intended to rise above sea-level after installation. In practice, there may also be other reasons for the need of applying an additional coating over the compressed thermally sprayed metallic coating.

Advantageously, the parts of the circumferential external surface of the monopile corresponding to the one or more positions have a width that varies between 0.2 m and 3 m, preferably between 0.4 m and 2.5 m, more preferably between 0.5 m and 2 m, most preferably between 0.7 m and 1.5 m, based on which type of roller supports are used. The width of the metallic coating the one or more positions at which the roller supports are located depends on which type of roller supports are used. The width of the metallic coating should be at least as large as the width of the roller supports that are used. However, it may be advantageous if the width of the metallic coating is larger than the width of the roller supports that are used. For example, if the width of the roller support is approximately, 1 m, it may be beneficial if the width of the metallic coating is 1.5 m. As another example, if the width of the roller support is approximately 1.4 m, it may be beneficial if the width of the metallic coating is approximately 2 m. If the width of the metallic coating is larger than the width of the roller supports that are used, this allows for room for overlap applications of an adjacent coating system onto the metallic coating. In practice, leaving some room for overlap simplifies the coating process while insuring that no part of the monopile is left uncoated.

Advantageously, during the compressing, a compressive stress on the thermally sprayed metallic coating at a contact point exceeds 500 MPa, preferably 750MPa, more preferably 1GPa, most preferably 1.5 GPa. The compressive stress depends on the weight of the monopile as well as on the roller supports that are used. Applying a higher compressive stress enables a stronger compression of the coating thickness and thereby leads to a lower porosity and therefore increased corrosion protection.

Advantageously, the monopile comprises longitudinal submerged arc welds, and the monopile coating process further comprises grounding flush longitudinal submerged arc welds before placing the monopile on the roller supports. Monopiles can be formed by welding a plurality of shells together. A shell can be formed by rolling one or more steel plates in a cylindrical / conical shape and welding the connecting sides of the rolled plate(s). So, when the monopile is formed the monopile comprises longitudinal submerged arc welds. As a preparation for the coating process, the longitudinal submerged arc welds should be ground flush. This may prevent stress concentration at welds. Stress concentration at welds can induce fatigue cracking.

Advantageously, the monopile coating process further comprises blast cleaning the parts of the circumferential external surface of the monopile corresponding to the one or more positions before applying the thermally sprayed metallic coating. Optionally, the blast cleaning is performed using open jet grit blasting, preferably with steel or mineral grit abrasive, or using automatic turbine blast cleaning, preferably with steel grit abrasive. Optionally, the blast cleaning comprises preparing the surface to a ISO 8501-1 Sa 3 (white metal) standard or to a ISO 8501-1 Sa2½ standard or to a SSPC-SP10/NACE No. 2 Near White Blast Cleaning standard (standard last revised January 2007) or to a SSPC-SP 5/NACE No. 1, White Metal Blast Cleaning standard (last revised January 2007). Optionally, the blast cleaning comprises preparing the surface to have a sharp angular profile depth in the range of 40 µm to 150 µm, preferably 50 µm to 125 µm, more preferably 60 µm to 115 µm, most preferably 80 µm to 105 µm. Preparing the parts of the circumferential external surface of the monopile corresponding to the one or more positions before applying the thermally sprayed metallic coating using blast cleaning ensures that the surface is particularly suitable for applying the thermally sprayed metallic coating. By preparing the surface particularly well, the adhesion the thermally sprayed metallic coating is improved.

In a second aspect of this disclosure a monopile is provided. The monopile is coated using the monopile coating process of any one of claims 1-14.

In a third aspect of this disclosure, a monopile coating system is provided. The monopile coating system comprises roller supports and thermal spray equipment, wherein the roller supports are provided with rotating means for rotating a monopile when the monopile is placed on the roller supports, and wherein the rollers are supporting the monopile and are located at one or more positions along the axis of the monopile when the monopile is placed on the roller supports, and wherein the thermal spray equipment is configured to apply a thermally sprayed metallic coating, such as an aluminium or zinc-aluminium coating , to parts of the circumferential external surface of the monopile corresponding to the one or more positions. Advantageously, the monopile coating system is further configured to carry out the monopile coating process of any one of claims 1-14.

In a fourth aspect of this disclosure, a coating process is provided. The coating process comprises applying a thermally sprayed metallic coating, such as an aluminium or zinc aluminium coating, to a surface and compressing the thermally sprayed metallic coating.

When the thermally sprayed metallic coating is applied, it has a ductile and porous structure. Compressing the thermally sprayed metallic coating reduces the porosity. Surprisingly, the adhesion properties of the thermally sprayed metallic coating remain. Due to compression of the thermally sprayed metallic coating, the thermally sprayed metallic coating becomes less permeable. A coating that is less permeable may have enhanced corrosion protection properties.

Advantageously, the compressing the thermally sprayed metallic coating comprises compressing the thermally sprayed metallic coating such that the thickness of the coating is reduced by between 15% and 80%, preferably by between 20% and 70%, more preferably by between 25% and 60%, most preferably by between 30% and 50%. In other words, after compression, the layer has a thickness that is between 20% and 85%, preferably between 30% and 80%, more preferably between 40% and 75%, most preferably between 50% and 70% of the original layer thickness.Reducing the thickness of the coating by compressing the coating lowers the porosity of the coating, thereby reducing the permeability of the coating and improving the anti-corrosive properties of the coating.

Advantageously, after the compressing, the sprayed metallic coating comprises a surface that has a smooth, shiny and uniform appearance free from cracks, laminations, lumps or other visible imperfections. The compressing the sprayed metallic coating reduces the porosity and evens out the surface. Because of this, the surface of the coating looks visually different after the compressing, compared to a sprayed metallic coating that is not compressed. A further advantage of a smooth surface is that it becomes harder for micro-organisms to attach the surface. Since micro-organisms may cause corrosion, a smooth surface may contribute to corrosion protection.

Advantageously, the coating process further comprises, after the applying the thermally sprayed metallic coating and before or during the compressing the thermally sprayed metallic coating, applying protective materials, such as a polymer foam or a rubber sheet, over the thermally sprayed metallic coating. Applying a protective material before or during the compression of the thermally sprayed metallic coating may help to protect the coating from some forms of mechanical damage and preserve the surface from contamination.

Advantageously, the coating process further comprises applying a sealer over the thermally sprayed metallic coating after the compressing the thermally sprayed metallic coating. A sealer is a low volume solid liquid coating which penetrates and fills any surface porosity. Applying a sealer after the compressing further reduces the porosity of the coated monopile surface. A lower porosity contributes to improving the anti-corrosive properties of the coating.

Advantageously, the coating process further comprises applying a further coating over the thermally sprayed metallic coating, after the compressing the thermally sprayed metallic coating.

Advantageously, during the compressing, a compressive stress on the thermally sprayed metallic coating exceeds 500 MPa, preferably 750MPa, more preferably 1GPa, most preferably 1.5 GPa. Applying a higher compressive stress enables a stronger compression of the coating thickness and thereby leads to a lower porosity and therefore increased corrosion protection.

Advantageously, the coating process further comprises blast cleaning the surface before applying the thermally sprayed metallic coating. Optionally, the blast cleaning is performed using open jet grit blasting, preferably with steel or mineral grit abrasive, or using automatic turbine blast cleaning, preferably with steel grit abrasive. Optionally, the blast cleaning comprises preparing the surface to a ISO 8501-1:2007 Sa 3 (white metal) standard or to a ISO 8501-1 Sa2½ standard or to a SSPC-SP10/NACE No. 2 Near White Blast Cleaning standard (standard last revised January 2007) or to a SSPC-SP 5/NACE No. 1, White Metal Blast Cleaning standard (last revised January 2007). Optionally, the blast cleaning comprises preparing the surface to have a sharp angular profile depth in the range of 40 µm to 150 µm, preferably 50 µm to 125 µm, more preferably 60 µm to 115 µm, most preferably 80 µm to 105 µm. Preparing the surface before applying the thermally sprayed metallic coating using blast cleaning ensures that the surface is particularly suitable for applying the thermally sprayed metallic coating. By preparing the surface particularly well, the adhesion the thermally sprayed metallic coating is improved.

In a fifth aspect of this disclosure, a coating is provided. The coating is obtained by using the monopile coating process of the first aspect or by using the coating process of the fourth aspect. Advantageously, the coating may be used on a monopile.

In a sixth aspect of this disclosure, a coating system is provided. The coating system comprises thermal spray equipment and means for compressing a thermally sprayed metallic coating, wherein the thermal spray equipment is configured to apply a thermally sprayed metallic coating, such as an aluminium or zinc aluminium coating, to a surface and the means for compressing the thermally sprayed metallic coating are configured to compress the thermally sprayed metallic coating. Advantageously, the coating system is further configured to carry out the monopile coating process of the first aspect or by using the coating process of the fourth aspect.

### Brief Description of Drawings

Embodiments of the present invention will be described hereinafter, by way of example only, with reference to the accompanying drawings which are schematic in nature and therefore not necessarily drawn to scale. Furthermore, like reference signs in the drawings relate to like elements. In the attached figures,
- Figure 1 schematically shows a monopile coating process according to an embodiment of the disclosure.
- Figure 2 schematically shows a monopile coating proces according to an embodiment of the disclosure.
- Figure 3 schematically shows a side view of a monopile on roller supports according to an embodiment of the disclosure.
- Figure 4 schematically shows a front view of a monopile on roller supports according to an embodiment of the disclosure.
- Figure 5 schematically shows blast cleaning parts of a circumferential external surface of a monopile corresponding to one or more positions along the axis of the monopile at which roller supports are located according to an embodiment of the disclosure.
- Figure 6 schematically shows applying thermally sprayed metal to parts of a circumferential external surface of a monopile corresponding to one or more positions along the axis of the monopile at which roller supports are located according to an embodiment of the disclosure.
- Figure 7 schematically shows compressing a thermally sprayed metallic coating by rotating a monopile using roller supports according to an embodiment of the disclosure.
- Figure 8 schematically shows a monopile according to an embodiment of the disclosure.
- Figure 9A schematically shows a structure of a thermally sprayed metallic coating before compressing the thermally sprayed metallic coating according to an embodiment of the disclosure.
- Figure 9B schematically shows a structure of a thermally sprayed metallic coating after compressing the thermally sprayed metallic coating according to an embodiment of the disclosure.

### Detailed Description

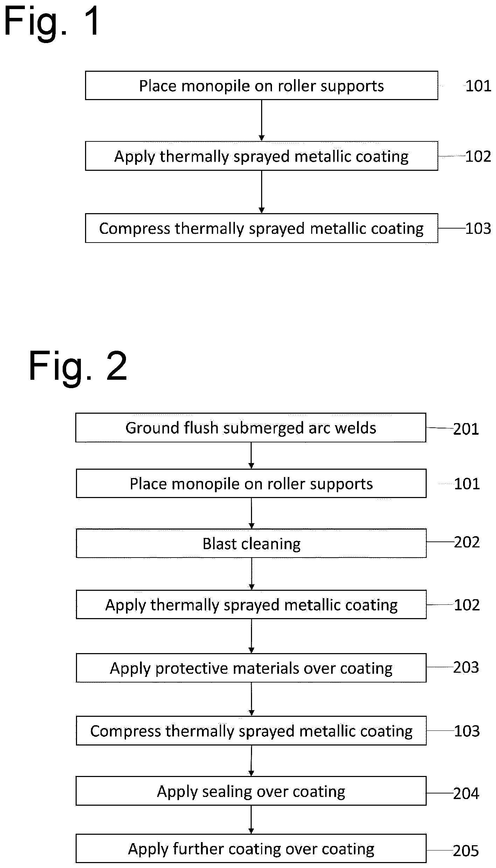

Figure 1 is a flowchart in which a monopile coating process is schematically shown.

In step 101, a monopile 301 is placed on roller supports 302-305.

In practice, the rollers supports 302-305 may be located in a coating hall. The environment in the coating hall may be controlled to be particularly suitable for coating and equipped with specialized coating equipment. Although the use of a coating hall is beneficial to the coating process and may enable an efficient application of a highquality coating, a monopile coating process may be carried out at any suitable indoor or outdoor location.

The monopile 301 may be obtained by welding a plurality of shells together. A shell can be formed by rolling one or more steel plates in a cylindrical / conical shape and welding the connecting sides of the rolled plate(s). In practice, the welding for obtaining the monopile does not take place inside the coating hall, but, for example, inside a welding hall in which the environment is controlled to be particularly suitable for welding and which is equipped with specialized welding equipment. Before coating, the uncoated monopile 301 is transported to the coating hall. To transport the monopile 301, it is possible to use trailers adapted to carry the weight of the monopile 301. Additionally or alternatively, the monopile 301 may be transported using cranes and/or boats and/or other suitable monopile transportation devices. Due to the large size and weight of the monopile 301, it may be costly to transport the monopile and unnecessary monopile transportations should be avoided.

It is, however, also possible to carry out a monopile coating process at the same location as the welding and not transport the monopile 301 to another location. However, in this case either welding and coating equipment should be present at the same location, or coating equipment should be transported to and installed in the welding location when the coating process is to be carried out. In order to achieve a streamlined and efficient monopile production and coating process, it may be preferable to perform the production and the coating of monopiles at distinct but closeby halls, each of the halls equipped with the appropriate equipment.

To place the monopile 301 on the roller supports 302-305, after the monopile has been transported to the coating hall, a crane or the like may be used. Additionally or alternatively, the roller supports 302-305 may be movable. In this case, it may be possible to transport the monopile 301 into the coating hall, for example by using a trailer, and then move the roller supports 302-305 toward the monopile 301. The roller supports 302-305 may be used to lift the monopile 301 off the trailer, after which the trailer may be removed. Additionally or alternatively, instead of lifting the monopile 301 using the roller supports 302-305, the monopile 301 may be placed on the roller supports 302-305, after which the trailer bed may be lowered and the trailer may be removed. The skilled person will appreciate that other ways of placing the monopile 301 on the roller supports 302-305 are also possible.

The monopile 301 is placed on the roller supports 302-305 such that the roller supports 302-305 are located at one or more positions along the axis of the monopile 301. After the monopile 301 is placed on the roller supports 302-305, the roller supports 302-305 support the weight of the monopile 301.

The roller supports 302-305 are provided with rotating means for rotating the monopile 301. For example, the roller supports 302-305 may be provided with an electric engine. When the electric engine is running, the rollers on which the monopile 301 rests may be caused to rotate by the electric engine. This then causes the monopile 301 to rotate around its axis.

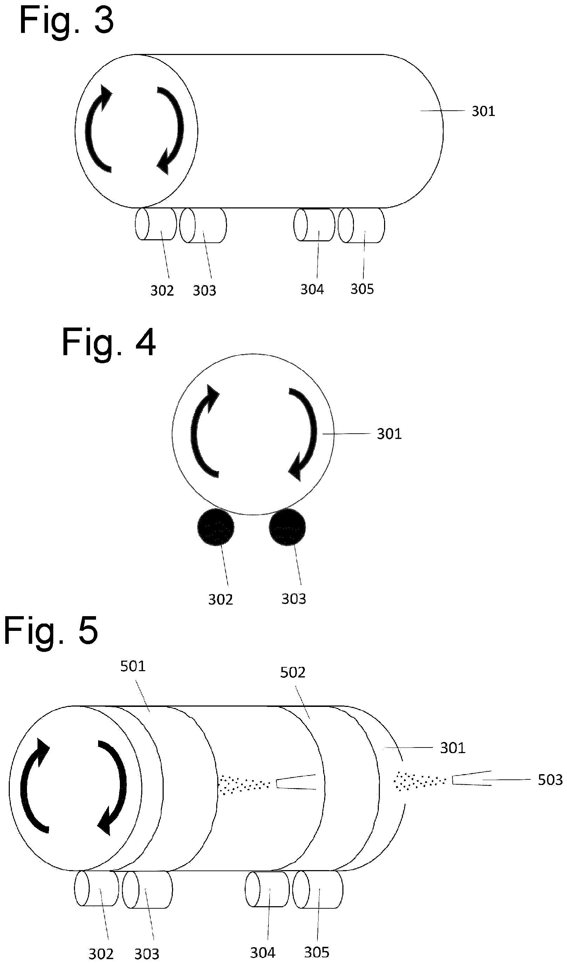

The placing 101 the monopile 301 on roller supports 302-305 will be described in further detail below, with reference to Figures 3 and 4.

In step 102, thermally sprayed metallic coating is applied.

When the monopile 301 is rotated, the circumferential external surface of the monopile 301 moves relative to the roller supports 302-305. The rotation of the monopile 301 causes different parts of the circumferential external surface to come into contact with the roller supports 302-305. After at least one rotation of the monopile 301, a number of bands with the same widths as the contact widths between the monopile 301 and the respective rollers 302-305 and surrounding the monopile 301 will have come into contact with at least one of the roller supports 302-305.

A thermally sprayed metallic coating may be applied to the bands on the monopile surface that come into contact with at least one of the roller supports. A thermally sprayed metallic coating may be applied to to parts 501, 502 of the circumferential external surface of the monopile corresponding to the one or more positions at which the roller supports 302-305 are located. Said parts 501, 502 of the circumferential external surface of the monopile corresponding to the one or more positions may comprise the bands on the monopile surface that come into contact with at least one of the roller supports 302-305 and may preferably further comprise an area of the circumferential external surface directly adjacent to said bands.

For example, if a contact width between the monopile 301 and at least one of the respective rollers 302-305 is approximately 1 m, it may be beneficial if the part 501, 502 of the circumferential external surface of the monopile corresponding to the position of said at least one of the respective rollers has a width of approximately 1.5 m. As another example, if a contact width between the monopile 301 and at least one of the respective rollers 302-305 is approximately 1.4 m, it may be beneficial if the part 501, 502 of the circumferential external surface of the monopile corresponding to the position of said at least one of the respective rollers has a width of approximately 2 m.

A thermally sprayed metallic coating is applied to parts of the circumferential external surface of the monopile corresponding to the one or more positions. The thermally sprayed metallic coating may comprise, for example an aluminium coating or a zinc aluminium coating. ISO 14919:2015 specifies requirements for classification of metal and non-metal wires (solid and cored), rods, cords processed by means of thermal spraying, especially by arc and flame spraying. An example of an aluminium coating is type Al99.5 of ISO 14919:2015. An example of a zinc aluminium coating is type ZnAI15 of ISO 14919:2015. However, other types of thermally sprayed metallic coatings may also be used.

The thermally sprayed metallic coating may be applied to a thickness of approximately 300-1000 micrometres, preferably approximately 500-800 micrometres, more preferably approximately 600-700 micrometres, most preferably approximately 650 micrometres. To determine the thickness, electronic thickness gauges may be used.

After application, the thermally sprayed metallic coating has a ductile and porous structure.

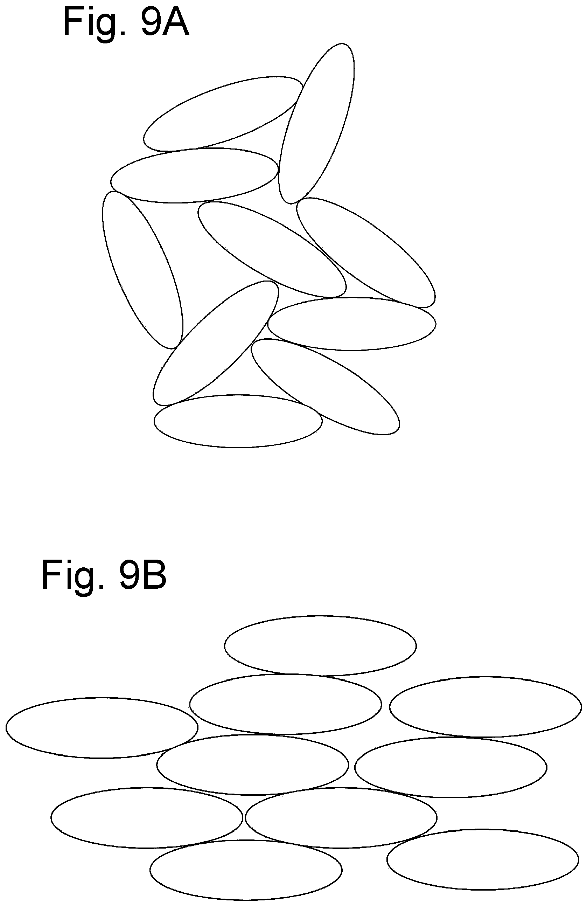

Further properties of the thermally sprayed metallic coating will be described in further detail below, with reference to Figure 9A.

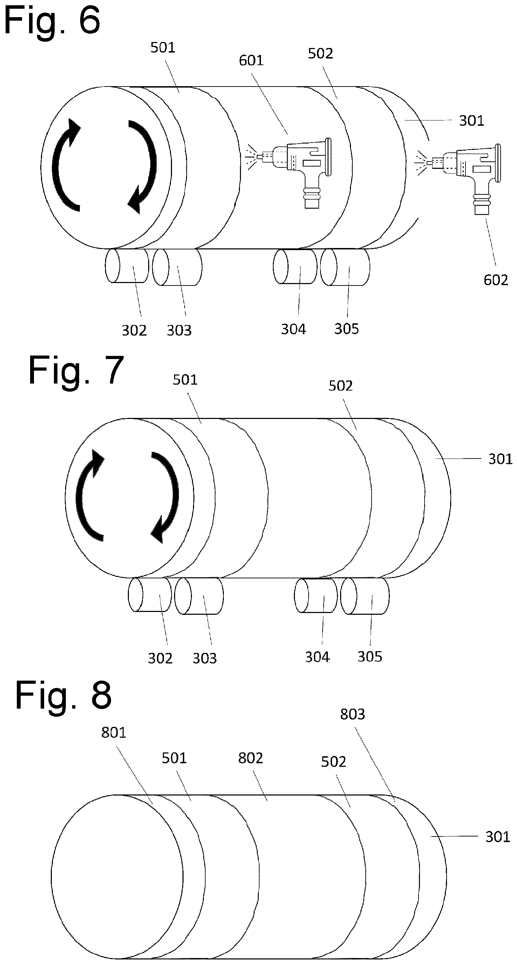

The applying 102 the thermally sprayed metallic coating will be described in further detail below, with reference to Figure 6.

In step 103, the thermally sprayed metallic coating is compressed.

The thermally sprayed metallic coating applied to the bands on the monopile surface that come into contact with at least one of the roller supports 302-305 are compressed by rotating the monopile 301. Since the thermally sprayed metallic coating may also be applied outside the bands on the monopile surface that come into contact with at least one of the roller supports 302-305, it is possible that part, but not all, of the thermally sprayed metallic coating is compressed.

Due to the weight of the monopile 301, a compressive stress on the thermally sprayed metallic coating at contact points between the roller supports 302-305 and the monopile 301 may exceed 500 MPa, preferably 750MPa, more preferably 1GPa, most preferably 1.5 GPa.

The thermally sprayed metallic coating may be compressed by rotating the monopile 301 a number of times. For example, the monopile 301 may be rotated at least 10, preferably at least 20, more preferably at least 25, most preferably at least 30 times. Compressing the thermally sprayed metallic coating by rotating the monopile 301 a large number of times may increase the amount of compression of the thermally sprayed metallic coating. In practice, the monopile 301 may be rotated during the applying the thermally sprayed metallic coating. So, it is possible that in practice not all parts of the circumferential external surface of the monopile corresponding to the one or more positions at which the roller supports 302-305 are located are compressed the same amount of times. Furthermore, it is noted that the monopile 301 may be further rotated during subsequent coating of the rest of the monopile, further increasing the number of times the thermally sprayed metallic coating is compressed.

Due to the high compressive stress and the number of rotations of the monopile 301, the thickness of the thermally sprayed metallic coating may be reduced. The thickness of the coating may be reduced by between 15% and 80%, preferably by between 20% and 70%, more preferably by between 25% and 60%, most preferably by between 30% and 50%. In other words, after compression, the layer has a thickness that is between 20% and 85%, preferably between 30% and 80%, more preferably between 40% and 75%, most preferably between 50% and 70% of the original layer thickness. Reducing the thickness of the thermally sprayed metallic coating by compressing the coating may lower the porosity of the thermally sprayed metallic coating, and may thereby reduce the permeability of the thermally sprayed metallic coating and may thereby improve the anti-corrosive properties of the thermally sprayed metallic coating.

For example, if a thermally sprayed aluminium coating (such as type Al99.5 of ISO 14919:2015) is applied to a thickness of 700 micrometres and subjected to a compressive stress of approximately 1 GPa by rotating the monopile 25 times, the thickness after compression may be reduced to 350 micrometres.

For another example, if a thermally sprayed aluminium-zinc coating (such as type ZnAI15 of ISO 14919:2015) is applied to a thickness of 700 micrometres and subjected to a compressive stress of approximately 1 GPa by rotating the monopile 25 times, the thickness after compression may be reduced to 450 micrometers.

It was surprisingly found that the adhesion properties of the thermally sprayed metallic coating do not deteriorate due to the compression.

After the compressing, the sprayed metallic coating may comprise a surface that has a smooth, shiny and uniform appearance free from cracks, laminations, lumps or other visible imperfections. The compressing the sprayed metallic coating may reduce the porosity and may even out the surface of the coated monopile 301. Because of this, the surface of the coated monopile 301 looks visually different after the compressing, compared to a sprayed metal coated surface that is not compressed, such as the surface of the monopile 301 before compression, or parts of the monopile surface that are coated with the thermally sprayed metallic coating but not compressed, such as, for example, an area of the circumferential external surface of the monopile 301 directly adjacent to the bands on the monopile surface that come into contact with at least one of the roller supports 302-305. A further advantage of a smooth surface is that it becomes harder for micro-organisms to attach the surface. Since micro-organisms may cause corrosion, a smooth surface may contribute to corrosion protection.

The compressing the thermally sprayed metallic coating will be described in further detail below, with reference to Figure 7. Further properties of the thermally sprayed metallic coating after compression will be described in further detail below, with reference to Figure 9B.

It is noted that instead of compressing the thermally sprayed metallic coating by rotating the monopile, it is also possible to compress the thermally sprayed metallic coating in different ways. For example, rollers different from the roller supports 302-305 may be used for compressing the thermally sprayed metallic coating. Through such rollers, pressure may be applied. Additionally or alternatively, the thermally sprayed metallic coating may be compressed using a press, such as a hydraulic press or a mechanical press. Additionally or alternatively, the thermally sprayed metallic coating may be compressed using other suitable means for compressing the thermally sprayed metallic coating.

It is also noted that instead of applying the thermally sprayed metallic coating to the monopile surface, it is also possible to apply the thermally sprayed metallic coating to the surface of another object. After applying the thermally sprayed metallic coating, this coating may then be compressed. This enables the surface of the other object to be coated with a coating that is particularly suitable for corrosion protection

So, a coating method may comprise applying a thermally sprayed metallic coating to a surface and compressing the coating.

Figure 2 is a flowchart in which a monopile coating process is schematically shown. Figure 2 is similar to Figure 1, but with the addition of some optional steps. Some of the steps in Figure 2 are the same as in Figure 1, and a detailed description of these steps is omitted.

During the manufacturing of the monopile, the monopile 301 can be assembled using submerged arc welding. In step 201, as a preparation to the monopile coating process, the submerged arc welds may be ground flush. Grounding flush the submerged arc welds may serve to remove stress concentration or mechanical defects at the weld when it is passed over the roller.

Step 101 of Figure 2 may be the same as step 101 in Figure 1.

After placing the monopile 301 on roller supports 302-305, but before applying the thermally sprayed metallic coating, the monopile surface may be prepared for coating.

As a preparation for coating, in step 202 blast cleaning is performed.

The parts 501, 502 of the monopile 301 that are to be coated with thermally sprayed metallic coating may be blast cleaned. Preparing the surface before applying the thermally sprayed metallic coating using blast cleaning ensures that the surface is particularly suitable for applying the thermally sprayed metallic coating. By preparing the surface particularly well, the adhesion the thermally sprayed metallic coating is improved.

The blast cleaning 202 may be performed in various ways, for example using open jet grit blasting, preferably with steel or mineral grit abrasive, or using automatic turbine blast cleaning, preferably with steel grit abrasive. To ensure a consistent high quality of the blast cleaning, the blast cleaning may be performed to a ISO 8501-1:2007 Sa 3 (white metal) standard or to a ISO 8501-1 Sa2½ standard or to a SSPC-SP10/NACE No. 2 Near White Blast Cleaning standard (standard last revised January 2007) or to a SSPC-SP 5/NACE No. 1, White Metal Blast Cleaning standard (last revised January 2007). To prepare the surface for applying the thermally sprayed metallic coating, it is beneficial for the surface to have a sharp angular profile depth in the range of 40 µm to 150 µm, preferably 50 µm to 125 µm, more preferably 60 µm to 115 µm, most preferably 80 µm to 105 µm.

The blast cleaning 202 will be described in further detail below, with reference to Figure 5.

Step 102 of Figure 2 may be the same as step 102 of Figure 1.

Before and/or during the compression of the thermally sprayed metallic coating, protective materials may be applied to the coating in step 203. Protective materials may be applied before the compression. Protective materials may be applied during the compression, either during the entire time compression is performed, or during one or more parts of the compression steps. It is possible to apply the same protective material multiple times. It is also possible to apply different protective materials, simultaneously and/or subsequentially. It is also possible to skip step 203 and not apply any protective materials.

After applying the thermally sprayed metallic coating, protective materials may be applied over the coating. These protective materials may be applied before and/or during compressing the thermally sprayed metallic coating. Protective materials may be of plastic, engineered rubber and/or metallic composition. Protective materials may be in the form of foams, such as polymer foams, or in the form of sheets. Examples of polymer foams are Ethylene-vinyl acetate foam, polyethylene foam, nitrile rubber foam, polychloroprene foam, polyamide foam, polypropylene foam, polystyrene foam, polyurethane foam, polyvinyl chloride foam or silicone foam. However, other kinds of polymer foams may also be used. Rubber sheets may be suitable for use as protective materials. Applying a protective material may help to protect the coating from some forms of mechanical damage and preserve the surface from contamination.

Step 103 of Figure 2 may be the same as step 103 of Figure 1.

After compressing the thermally sprayed metallic coating, a sealing may be applied over the coating in step 204. A sealing is a low volume solid liquid coating which may penetrate and fill surface porosities.

Applying a sealing over the coating may contribute to preserving the coating. Applying a sealing may contribute to reducing the porosity of the compressed coating. Reducing the porosity of the coating may contribute to improving the anti-corrosive properties of the coating.

A sealing may comprise a low volume solids liquid coating material suitable for application over the thermally sprayed metallic coating.

A further coating may be applied over the coating in step 205. For example, the part of the monopile that is to be above sea-level after installation may be coated in a high-visibility coating, such as a coating with a yellow colour. Such a high-visibility coating on the part of the monopile 301 that is to be above sea-level may, for example, be required by regulations. However, there can also be other reasons for applying a further layer of coating to specific parts or even the whole of the monopile 301.

In practice, it may be possible to apply a coating to other parts of the monopile before the applying and compressing at least part of the thermally sprayed metallic coating to parts of the circumferential external surface of the monopile corresponding to the one or more positions, and/or after the applying and compressing at least part of the thermally sprayed metallic coating to parts of the circumferential external surface of the monopile corresponding to the one or more positions and/or simultaneously to the applying and compressing the thermally sprayed metallic coating to parts of the circumferential external surface of the monopile corresponding to the one or more positions.

Although not indicated in Figure 1 or Figure 2, a quality control may be performed after the coating process, to ensure that the coating is of the required quality. Furthermore, during or after any of the steps of Figure 1 or Figure 2, an intermediate quality control may be performed. Performing a quality control during the process, for example after a particular step (such as after the blast cleaning or after the compression), mitigates the risk that imperfect results in an earlier step lead to further problems in later steps.

Figure 3 schematically shows a side view of a monopile 301 on roller supports 302-305 according to an embodiment of the disclosure and Figure 4 schematically shows a front view of a monopile 301 on roller supports 302, 303 according to an embodiment of the disclosure.

It is noted that, even though the Figures show the monopile 301 is rotated clockwise, it is also possible to rotate the monopile 301 counter clockwise. Furthermore, it is possible to rotate the monopile 301 using a combination of clockwise and counter clockwise rotations, for example based on practical considerations.

Figures 3 and 4 schematically show roller supports 302-305. For supporting and rotating a monopile 301, various kinds of roller supports 302-305 are suitable. As a specific example, Deuma Turning Roll Type Z roller supports, produced by Deuma Positionniersysteme GmbH, are suitable for supporting and rotating a monopile 301. However, other kinds of roller supports 302-305 may also be used. Roller supports 302-305 may differ from each other in terms of maximum supported weight, roller width, roller surface materials or structure, rotation speed, or other properties.

It is possible to support one monopile 301 with different kinds of roller supports 302-305. For example, it is possible to support one monopile 301 with at least a first roller support with a width of 1 metre and a maximum supported weight of 100 tonnes, and at least a second roller support with a width of 2 metres and a maximum supported weight of 250 tonnes.

The skilled person is aware that the precise arrangement of roller supports 302-305 may depend on which roller supports are available and on the dimensions and weight of the monopile 301. For example, the weight of the monopile 301 should not exceed the total maximum supported weight of the roller supports 302-305. For example, the roller supports 302-305 should be arranged such that the weight supported by any roller support should be less than the maximum supported weight of that roller support.

Preferably, if a plurality of roller supports 302-305 is used, a maximum spacing between roller supports 302-305 is such that the monopile 301 does not appreciably bend under its own weight. For example, a maximum spacing between roller supports 302-305 along the direction of the axis of the monopile 301 may be approximately 5-10 metres.

Preferably, roller supports 302-305 are arranged in pairs. Preferably, each pair of rollers comprises two roller supports of the same kind. Although it is possible to arrange the roller supports 302-305 differently, arranging the roller supports 302-305 in pairs of roller supports of the same kind has the advantage of providing a particularly stable way of supporting the monopile 301.

Preferably, the roller supports 302-305 are arranged such that the pressure at contact points between roller supports 302-305 and monopile 301 is roughly equal. Doing so enables the compression of the thermally sprayed metallic coating with roughly equal pressures during a the compression step 103.

Figure 5 schematically shows blast cleaning parts of a circumferential external surface of a monopile corresponding to one or more positions along the axis of the monopile at which roller supports are located according to an embodiment of the disclosure.

Before applying 102 the thermally sprayed metallic coating, parts 501, 502 of a circumferential external surface of a monopile 301 corresponding to one or more positions along the axis of the monopile 301 at which roller supports 302-305 are located may be prepared using blast cleaning 202. Blast cleaning may be performed with automatic machines and/or manually.

As a preparation to the blast cleaning 202, it is further possible to prepare the parts 501, 502 to be blast cleaned using high-pressure water cleaning.

The parts 501, 502 of the circumferential external surface of the monopile 301 corresponding to the one or more positions along the axis of the monopile 301 at which the roller supports 302-305 are located may have a width that is greater than or equal to the width of the corresponding roller supports. For example, if a particular roller support has a width of 0.8 metres, the corresponding part may have a width of 0.8 metres. For example, if a particular roller support has a width of 1 metre, the corresponding part may have a width of 1.5 metre. For example, if a particular roller support has a width of 1.2 metres, the corresponding part may have a width of 2 metres. It is preferable if the width of the part of the circumferential external surface is slightly larger than the width of the corresponding roller, because this leaves room for overlap applications of an adjacent coating system onto the metallic coating. In practice, leaving some room for overlap simplifies the coating process while insuring that no part of the monopile 301 is left uncoated.

It is preferable to perform the blast cleaning 202 after placing 101 the monopile 301 on the roller supports 302-305. Doing so enables the monopile 301 to be rotated during the blast cleaning 202. If the monopile 301 is rotated during the blast cleaning 202, there is no need to move the blast cleaning equipment 503 vertically. Avoiding the need to move the blast cleaning equipment 503 vertically may simplify automation of the blast cleaning process. For example, the blast cleaning equipment 503 may be mounted on and moved along a horizontal rail extending along the direction of the axis of the monopile 301 Even if the blast cleaning 202 is carried out manually, avoiding the need to move the blast cleaning equipment 503 vertically avoids having to perform the blast cleaning 202 at height, thereby improving workplace safety.

Figure 6 schematically shows applying thermally sprayed metal to parts of a circumferential external surface of a monopile corresponding to one or more positions along the axis of the monopile at which roller supports are located according to an embodiment of the disclosure.

The thermally sprayed metal is applied using thermal spray equipment 601, 602. Such equipment is commercially available and the skilled person knows what equipment is suitable and what the advantages and disadvantages are of the different kinds of commercially available thermal spray equipment 601, 602.

The thermally sprayed metal, such as thermally sprayed aluminium or thermally sprayed zinc-aluminium, is applied to the parts 501, 502 of the circumferential external surface of the monopile 301 corresponding to the one or more positions along the axis of the monopile 301 at which the roller supports 302-305 are located.

Preferably, the monopile 301 is rotated during the applying 102 the thermally sprayed metallic coating. If the monopile 301 is rotated during applying 102 the thermally sprayed metallic coating, there is no need to move the thermal spray equipment 601, 602 vertically. Avoiding the need to move the thermal spray equipment 601, 602 vertically may simplify automation of the thermal spray process. For example, the thermal spray equipment 601, 602 may be mounted on and moved along a horizontal rail extending along the direction of the axis of the monopile 301. Even if the applying 102 the thermally sprayed metallic coating is carried out manually, avoiding the need to move the thermal spray equipment 601, 602 vertically avoids having to perform the applying 102 the thermally sprayed metallic coating at height, thereby improving workplace safety.

The thermally sprayed metal solidifies quickly. So, even if the thermally sprayed metal is applied to a rotating monopile 301, the thermal spray equipment and the monopile rotation speed and direction can be arranged such that the thermally sprayed metal has solidified before the thermally sprayed metal comes into contact with the roller. In practice, the thermally sprayed metal may solidify instantaneously. It is preferable that the thermally sprayed metal has solidified before the thermally sprayed metallic coating comes into contact with the roller surface, because the adhesion of liquid metal to the monopile surface may be insufficient to remain on the monopile surface during and after compression using the rollers. Furthermore, if the thermally sprayed metal has solidified before the thermally sprayed metallic coating comes into contact with the roller surface, it is easier to ensure the uniformness of the thermally sprayed metallic coating.

Figure 7 schematically shows compressing a thermally sprayed metallic coating by rotating a monopile using roller supports according to an embodiment of the disclosure.

Due to the weight of the monopile 301, a large compressive stress is applied to the thermally sprayed metallic coating. Depending on the weight of the monopile 301 and the distribution of the roller supports 302-305, a compressive stress on the thermally sprayed metallic coating at a contact point may exceed 500 MPa, preferably 750MPa, more preferably 1GPa, most preferably 1.5 GPa.

When the monopile is rotated, for each roller support and each rotation, the compressive stress is applied to a band with a width of the corresponding roller support around the external surface of the monopile. If a pair of roller supports is used, the compressive stress is applied twice per rotation.

It may be beneficial to rotate the monopile 301 a number of times to apply the compressive stress to the thermally sprayed metallic coating said number of times. For example, the monopile 301 may be rotated at least 10, preferably at least 20, more preferably at least 25, most preferably at least 30 times.

It is possible to apply the thermally sprayed metallic coating while rotating the monopile 301. In this case, not all parts 501, 502 of the circumferential external surface of the monopile 301 corresponding to the one or more positions along the axis of the monopile 301 at which the roller supports 302-305 are located may be coated at the same time. If not all parts 501, 502 are coated at the same time, some of the parts 501, 502 which are coated earlier may be compressed already before some of the parts 501, 502 which are coated later have been coated. So, the total number of times each of the parts 501, 502 is compressed may differ between the parts 501, 502.

It is noted that in practice not only the parts 501, 502 of the circumferential external surface of the monopile 301 corresponding to the one or more positions along the axis of the monopile 301 at which the roller supports 302-305 are located are coated, but the rest of the monopile 301 is also coated. Depending on the details of the coating process, it is possible that the monopile 301 is rotated a number of times after the parts 501, 502 have been coated and compressed. For example, if the rest of the monopile 301 is coated after the parts 501, 502 have been compressed, the monopile 301 may be rotated during the coating of the rest of the monopile 301, leading to the compressive stress being applied to the parts 501, 502 also during the coating of the rest of the monopile.

The compressing the thermally sprayed metallic coating by rotating the monopile 301 using the roller supports 302-305 may lead to a change in structure of the thermally sprayed metallic coating. For example, compression may reduce the thickness and/or the porosity of the thermally sprayed metallic coating. Furthermore, compression may change the visual appearance of the thermally sprayed metallic coating. For example, after the compression the coating may comprise a surface that has a smooth, shiny and uniform appearance free from cracks, laminations, lumps or other visible imperfections. Due to the compression, other changes in structure, visual appearance or other properties are also possible.

An advantage of applying pressure by rotating the monopile 301 is that the weight of the monopile 301 on the roller supports 302-305 causes sufficient pressure to compress the thermally sprayed metallic coating. This allows for a particularly efficient way of applying pressure to compress the thermally sprayed metallic coating. It is, however, noted that different methods for compressing the thermally sprayed metallic coating are also possible. For example, pressure may be applied through rollers different from the roller supports. Additionally or alternatively, pressure may be applied through a press, such as a mechanic press or a hydraulic press. The alternative ways of applying pressure may also be used to obtain a compressed thermally sprayed metallic coating on surfaces other than the circumferential external surface of a monopile.

Figure 8 schematically shows a monopile according to an embodiment of the disclosure.

The exterior surface of a monopile 301 may be completely coated. Different parts of the exterior surface of the monopile 301 may be coated using the same or different coating systems.

For example, the parts 501 and 502 may be coated with a compressed thermally sprayed metallic coating. The parts 801, 802, 803 may be coated with a compressed thermally sprayed metallic coating or with one or more other coatings.

For example, the parts 501 and 502 may be coated with a compressed thermally sprayed metallic coating. It is possible that the part to which the thermally sprayed metallic coating is applied is wider than the roller width, in which case the parts 501 and 502 are partly coated with the compressed thermally sprayed metallic coating and partly coated with the non-compressed thermally sprayed metallic coating and wherein the compressed thermally sprayed metallic coatings form a bands within the parts 501 and 502, wherein the bands have a width equal to the width of the roller supports that were used to compress the coating. The parts 801, 802, 803 may be coated using an epoxy coating and/or an uncompressed thermally sprayed metallic coating and/or a compressed metallic coating. The parts 801, 802, 803 may be coated with the same or different coatings and within a particular part multiple different coatings may be used. The multiple different coatings may be overlapping or nonoverlapping.

For example, a monopile 301 may be coated by applying thermally sprayed metal to parts 501 and 502, rotating the monopile to compress at least part of the thermally sprayed metal in the parts 501 and 502 and then the other parts 801, 802, 803 of the monopile may be coated using an epoxy coating. For example, one, two, three or more layers of epoxy coating may be applied to the monopile. It is possible to rotate the monopile 301 while applying the epoxy coating, which enables an efficient application of the epoxy coating. For practical reasons, for example to ensure the monopile is completely coated, the epoxy coating may also be applied over at least some uncompressed thermally sprayed metallic coating that may be present in the parts 501 and 502. Although epoxy coating could be applied over the compressed thermally sprayed metallic coating that is present in the parts 501 and 502, any epoxy coating that comes into contact with at least one of the roller supports 302-305 would be damaged. So, if the coating process is carried out while rotating the monopile, no epoxy coating remains on the parts of the monopile that are contacted by the roller supports 302-305. Applying the thermally sprayed metal to parts 501 and 502, rotating the monopile to compress at least part of the thermally sprayed metal in the parts 501 and 502 and then applying one, two, three or more layers of epoxy coating to the other parts 801, 802, 803 of the monopile 301 is a cost-effective way of coating the monopile. This coating process is cost-effective, because the monopile 301 may be rotated during the coating, enabling automation of the coating process. Since a large part of the monopile is coated with an epoxy coating, the method may be cost effective, since an epoxy coating may be cheaper than a thermally sprayed metallic coating.

For example, a monopile 301 may be coated by applying thermally sprayed metal to the whole exterior surface. During the applying the thermally sprayed metal, the monopile 301 may be rotated using roller supports 302-305. After the coating process, the parts of the exterior surface of the monopile 301 corresponding to the positions of the roller supports 302-305 during the coating process will have been coated with compressed thermally sprayed metal, while the other parts of the exterior surface of the monopile 301 will have been coated with uncompressed thermally sprayed metal. In this way, only one material may need to be used for coating the monopile 301, which may also contribute to automatization of the coating process. A monopile 301 may be coated particularly quickly in this way, because it may be sufficient to apply only one layer of coating and also because thermally sprayed metal solidifies quickly, as opposed to for example epoxy coating, which may need to be applied in multiple layers and which may also need to dry up to 24 hours between application of layers.

For example, a monopile 301 may be coated by applying thermally sprayed metal to the essentially the whole exterior surface and compressing the thermally sprayed metallic coating. For this purpose, the monopile 301 may be rotated a number of times, after which the monopile 301 and/or the roller supports 302-305 may be moved, so that pressure may be applied to a part of the thermally sprayed metallic coating that has not yet been compressed. By moving the monopile 301 and/or the roller supports 302-305, large parts of or even the whole exterior surface may be coated with the compressed thermally sprayed metallic coating. In this way, a monopile 301 comprising a particularly corrosion-resistant coating may be obtained.

It should be emphasized that the monopile 301 may also be coated in different ways and compressed thermally sprayed metallic coatings, uncompressed thermally sprayed metallic coatings, epoxy coatings and other coatings and any combination of these may be applied to any part of the monopile 301. One, two, three or more layers of any coating or combination of coatings may be applied to any part of the monopile 301. The choice of coating may depend on practical considerations.

Practical considerations that may influence the choice of coating may include, but are not limited to, for example cost and/or time needed to apply the coating and/or time needed for the coating to dry and/or the need to support the monopile 301 during coating and/or whether the coating provides cathodic protection and/or a need for a coating to be high-visibility and/or other considerations.

Preferably, in a coating process the roller supports 302-305 are arranged such that the roller positions coincide with the parts of the monopile 301 where a compressed thermally sprayed metallic coating is desired or at least acceptable. Preferably, in a coating process the roller supports 302-305 are arranged such that the roller positions do not coincide with the parts of the monopile 301 where a coating different from a compressed thermally sprayed metallic coating is desired, for example where an epoxy coating or an uncompressed thermally sprayed metallic coating is desired. If it is possible the roller supports 302-305 in such a way, a coating process may be fully automated.

Figure 9A schematically shows a structure of a thermally sprayed metallic coating before compressing the thermally sprayed metallic coating according to an embodiment of the disclosure. Figure 9B schematically shows a structure of a thermally sprayed metallic coating after compressing the thermally sprayed metallic coating according to an embodiment of the disclosure.

A thermally sprayed metallic coating is applied by spraying molten droplets of coating material onto a surface. Before the coating solidifies, the molten droplets may splatter. After solidification, the thermally sprayed metallic coating may have a structure comprising platelets of coating material, wherein the platelets may be oriented in random directions. Such a structure may be porous and ductile, due to the random orientation of the platelets.

Compression of the thermally sprayed metallic coating may cause the structure of the coating to change. Under pressure, the platelets may align along a direction perpendicular to the pressure. Through this alignment, open space between the platelets is reduced. This may cause the thickness of the coating to decrease and may also cause a decrease in porosity and ductility.

After compression, visual properties of the thermally sprayed metallic coating may also be different from visual properties of the thermally sprayed metallic coating before compression. In particular, after compression the coating may comprise a surface that has a smooth, shiny and uniform appearance free from cracks, laminations, lumps or other visible imperfections.

Surprisingly, compression of the thermally sprayed metallic coating may not significantly decrease adhesiveness of the coating. A coating that is relatively non-porous and sufficiently adhesive may be particularly suitable for corrosion protection.

Additionally or alternatively, compression of the thermally sprayed metallic coating may have further and/or other effects. Compression of the thermally sprayed metallic coating and/or any further and/or any other effects achieved thereby may achieve at least some of the benefits described above or may achieve other benefits.

In the foregoing description of the figures, the invention has been described with reference to specific embodiments thereof. It will, however, be evident that various modifications and changes may be made thereto without departing from the scope of the invention as summarized in the appended claims.

In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

In particular, combinations of specific features of various aspects of the invention may be made. An aspect of the invention may be further advantageously enhanced by adding a feature that was described in relation to another aspect of the invention.

It is to be understood that the invention is limited by the appended claims only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A monopile coating process, comprising:
placing a monopile on roller supports, wherein the roller supports are provided with rotating means for rotating the monopile when the monopile is placed on the roller supports, and wherein the rollers are supporting the monopile and are located at one or more positions along the axis of the monopile when the monopile is placed on the roller supports,
applying a thermally sprayed metallic coating, such as an aluminium or zinc-aluminium coating, to parts of the circumferential external surface of the monopile corresponding to the one or more positions, and,
compressing at least part of the thermally sprayed metallic coating by rotating the monopile using the roller supports

2. The monopile coating process of claim 1, wherein the compressing at least part of the thermally sprayed metallic coating comprises compressing the thermally sprayed metallic coating such that the thickness of the coating is reduced by between 15% and 80%, preferably by between 20% and 70%, more preferably by between 25% and 60%, most preferably by between 30% and 50%.

3. The monopile coating process of any one of the previous claims, wherein the compressing at least part of the thermally sprayed metallic coating comprises rotating the monopile at least 10, preferably at least 20, more preferably at least 25, most preferably at least 30 times on average.

4. The monopile coating process of any one of the previous claims, wherein, after the compressing, the sprayed metallic coating comprises a surface that has a smooth, shiny and uniform appearance free from cracks, laminations, lumps or other visible imperfections.

5. The monopile coating process of any one of the previous claims, further comprising, after the applying the thermally sprayed metallic coating and before or during the compressing at least part of the thermally sprayed metallic coating, applying protective materials, such as a polymer foam or a rubber sheet, over the thermally sprayed metallic coating.

6. The monopile coating process of any one of the previous claims, further comprising, after the compressing at least part of the thermally sprayed metallic coating, applying a sealer over the thermally sprayed metallic coating.

7. The monopile coating process of any one of the previous claims, further comprising, after the compressing at least part of the thermally sprayed metallic coating, applying a further coating over the thermally sprayed metallic coating.

8. The monopile coating process of any one of the previous claims, wherein the parts of the circumferential external surface of the monopile corresponding to the one or more positions have a width that varies between 0.2 m and 3 m, preferably between 0.4 m and 2.5 m, more preferably between 0.5 m and 2 m, most preferably between 0.7 m and 1.5 m, based on which type of roller supports are used.

9. The monopile coating process of any one of the previous claims, wherein, during the compressing, a compressive stress on the thermally sprayed metallic coating at a contact point exceeds 500 MPa, preferably 750MPa, more preferably 1GPa, most preferably 1.5 GPa.

10. The monopile coating process of any one of the previous claims, further comprising blast cleaning the parts of the circumferential external surface of the monopile corresponding to the one or more positions before applying the thermally sprayed metallic coating.

11. The monopile coating process of claim 10, wherein the blast cleaning is performed using open jet grit blasting, preferably with steel or mineral grit abrasive, or using automatic turbine blast cleaning, preferably with steel grit abrasive.

12. The monopile coating process of any one of claims 10-11, wherein the blast cleaning comprises preparing the surface to have a sharp angular profile depth in the range of 40 µm to 150 µm, preferably 50 µm to 125 µm, more preferably 60 µm to 115 µm, most preferably 80 µm to 105 µm.

13. A monopile coated using the monopile coating process of any one of claims 1-12.

14. A monopile coating system comprising roller supports and thermal spray equipment, wherein the roller supports are provided with rotating means for rotating a monopile when the monopile is placed on the roller supports, and wherein the rollers are supporting the monopile and are located at one or more positions along the axis of the monopile when the monopile is placed on the roller supports, and wherein the thermal spray equipment is configured to apply a thermally sprayed metallic coating, such as an aluminium or zinc-aluminium coating, to parts of the circumferential external surface of the monopile corresponding to the one or more positions.

15. The monopile coating system of claim 16, further configured to carry out the monopile coating process according to any one of claims 2-12.
